(19) Europäisches Patentamt
European Patent Office
Office européen des brevets

(11) **EP 2 728 892 A1**

(12) **EUROPEAN PATENT APPLICATION**

(43) Date of publication:
**07.05.2014 Bulletin 2014/19**

(51) Int Cl.:
*H04N 21/414* (2011.01)   *H04N 21/431* (2011.01)
*H04N 21/41* (2011.01)   *H04N 21/258* (2011.01)
*H04N 21/24* (2011.01)

(21) Application number: **12191347.9**

(22) Date of filing: **06.11.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Saidi, Mohamed Adel
91620 Nozay (FR)**

• **Sayadi, Bessem
91620 Nozay (FR)**
• **Nouri, Marwen
91620 Nozay (FR)**

(74) Representative: **Camus, Olivier Jean-Claude
Cabinet Camus Lebkiri
87, rue Taitbout
75009 Paris (FR)**

(54) **Method for transmitting a video content with a high resolution to mobile communication equipments having collaborating screens, and associated devices**

(57)    A method comprises a step (i) during which, in case where mobile communication equipments (E1, E2) have decided to display complementary parts of a video content on their screens (S1, S2), one of them requests this video content near a server (MS) and provides it with their network configurations, a step (ii) during which the server (MS) requests their display configurations near the mobile communication equipments (E1, E2) and then determines individual screen areas intended for displaying the video content complementary parts from the requested display configurations, and an optimal video resolution from the sum of estimated bandwidths of the mobile communication equipments (E1, E2) and the sum of the determined individual screen areas, and a step (iii) during which the server (MS) transmits the video content complementary parts with the optimal video resolution to the mobile communication equipments (E1, E2) into individual video streams of a session.

FIG.1

## Description

### Technical field

The present invention relates to video content transmission, and more precisely to the transmission of video contents whose complementary parts are intended to be displayed simultaneously onto several screens of mobile communication equipments installed some next to the others.

### Background of the invention

Most of the mobile communication equipments that are now proposed have a powerful processor and a large amount of computing resources that offer, notably, important network capacities, better screen resolutions and numerous display capacities. Unfortunately the (network) bandwidth that is generally assigned to this type of mobile communication equipment by a network operator is often low and therefore prevents its user to take advantage of some of its powerful capacities. For instance, because of low bandwidth, a video content cannot be generally transmitted in high resolution, which prevents its user to watch it optimally in streaming on the screen of his mobile communication equipment.

Several collaborative solutions have been proposed to slightly improve the situation of users located in a same area, such as a room, a train, a park or at any entertainment event. These solutions consist in simultaneously displaying complementary parts of a video content onto several screens of mobile communication equipments installed some next to the others. The multi-display, that is momentarily built over a wireless network (possibly in an ad hoc manner), simply allows the concerned users to watch the streamed video content on a larger display area. This guaranties a proper synchronization of the individual displays with low latency, and sometimes may also allow users to perform multi-touch interaction metaphors, even through different mobile communication equipments. But these solutions do not allow improving the quality of the displayed video content because the same video content is transmitted to all the concerned mobile communication equipments with the same low resolution (due to their low assigned bandwidth) and therefore these mobile communication equipments display, by means of a custom collaborative application, complementary parts of the video content depending on their relative positions.

### Summary of the invention

So, an objective of the invention is to improve the situation, and notably to allow multi-display of a video content in a collaborative manner and in a larger resolution than in a single display.

More precisely, the invention provides a method, intended for transmitting a video content from a server to at least two mobile communication equipments having a network configuration and a screen with a display configuration, and comprising:

- a step (i) during which, in case where at least two of these mobile communication equipments have decided to display complementary parts of a same video content on their screens, one of these mobile communication equipments requests the video content near the server and provides the latter with the network configurations,
- a step (ii) during which the server individually requests the display configurations near the concerned mobile communication equipments and then determines individual screen areas intended for displaying the video content complementary parts from the requested display configurations, and an optimal video resolution from the sum of estimated bandwidths of the concerned mobile communication equipments and a sum of the determined individual screen areas, and
- a step (iii) during which the server simultaneously transmits the video content complementary parts with the determined optimal video resolution to the corresponding mobile communication equipments into individual video streams of a session, so that they display these complementary parts into the individual screen areas of their respective screens.

The method according to the invention may include additional characteristics considered separately or combined, and notably:

- in step (i), a first mobile communication equipment, that is the first to decide displaying the video content, may determine if at least one other mobile communication equipment located in its radio vicinity is ready to collaborate for displaying together the video content complementary parts, and in the affirmative this first mobile communication equipment requests the network configuration from each other mobile communication equipment that is ready to collaborate, and then provides the server with its own network configuration and each received network configuration;
- in step (ii) the server may determine the sum of the estimated bandwidths by combining assigned bandwidths of the concerned mobile communication equipments;
- at the end of step (ii) the server may generate a calibration image divided into complementary parts corresponding respectively to the determined individual screen areas, and then may simultaneously transmit these calibration image complementary parts to the corresponding mobile communication equipments so that they display them respectively onto their screens in the corresponding determined individual screen areas, in order their respective users precisely adjust relative positions of their mobile communication equipments to rebuild this calibration image from the displayed complementary parts;
- each network configuration may comprise at least an IP address and a communication port that can receive a video stream;
- in step (ii) the server may determine current relative positions of the mobile communication equipments that are ready to collaborate, and may use these current relative positions to determine the individual screen areas.

The invention also provides a first device, intended for controlling transmission of a video content from a server to at least two mobile communication equipments, having a network configuration and a screen with a display configuration, and comprising:

- an arrangement means arranged, after having received network configurations of at least two mobile communication equipments having decided to display complementary parts of a same video content on their screens, for individually requesting the display configurations of these mobile communication equipments and then for determining individual screen areas intended for displaying the video content complementary parts from the requested display configurations,
- a managing means arranged for determining an optimal resolution for the video content from a sum of estimated bandwidths of the concerned mobile communication equipments and a sum of the determined individual screen areas, and
- a splitting means arranged for splitting the video content into the complementary parts with this determined optimal video resolution so that they could be simultaneously transmitted by the server to the corresponding mobile communication equipments into individual video streams of a session and then displayed into the individual screen areas of their respective screens.

The first device according to the invention may include additional characteristics considered separately or combined, and notably:

- its managing means may be arranged for determining the sum of the estimated bandwidths from the bandwidth of a first mobile communication equipment estimated during an individual session initially established by the latter with the server to receive video content before initiating the collaboration;
- its splitting means may be arranged, before transmitting the individual video streams, for generating a calibration image divided into complementary parts corresponding respectively to the determined individual screen areas, and then for ordering its server to simultaneously transmit this calibration image complementary parts to the corresponding mobile communication equipments so that they display them respectively onto their screens in the corresponding determined individual screen areas, in order their respective users precisely adjust relative positions of their mobile communication equipments to rebuild this calibration image from the displayed complementary parts;
- its managing means may be arranged for determining current relative positions of the mobile communication equipments that are ready to collaborate, and for using these current relative positions to determine the individual screen areas.

The invention also provides a server, intended for transmitting video contents to mobile communication equipments, and comprising a first device such as the one above introduced.
The invention also provides a second device, intended for equipping a mobile communication equipment having a network configuration and a screen with a display configuration, and arranged:

- for determining if at least one other mobile communication equipment located in the radio vicinity of its mobile communication equipment is ready to collaborate with the latter for displaying complementary parts of a same video content on their screens, and

- for providing a server with these network configurations so that it transmits the video content complementary parts with an optimal video resolution to the mobile communication equipments that are ready to collaborate.

**Brief description of the figures**

Other features and advantages of the invention will become apparent on examining the detailed specifications hereafter and the appended drawings, wherein:

- figure 1 schematically and functionally illustrates an example of telecommunication system comprising a transport network, a server, equipped with an example of embodiment of a first device according to the invention, and two mobile communication equipments equipped with an example of embodiment of a second (control) device according to the invention,
- figure 2 schematically illustrates an example of display area computed by a first device according to the invention for a screen arrangement of the two mobile communication equipments illustrated in figure 1,
- figure 3 schematically illustrates an example of calibration image generated by a first device according to the invention to allow a precise positioning of the screens of the two mobile communication equipments illustrated in figure 1, and

- figure 4 schematically illustrates an example of sequence diagram allowing implementation of a transmission method according to the invention in the telecommunication system illustrated in figure 1.

## Detailed description of the preferred embodiment

The appended drawings may serve not only to complete the invention, but also to contribute to its understanding, if need be.

The invention aims, notably, at offering a transmission method, and first D1 and second D2 associated devices, intended for allowing transmission of video contents between a server MS and at least two mobile communication equipments Ei momentarily located in a same area.

In the following description it will be considered that the mobile communication equipments Ei are smartphones. But the invention is not limited to this type of mobile communication equipments. Indeed, it concerns any type of mobile communication equipment capable of receiving (notably in a streaming mode) video contents and of displaying these video contents onto at least one screen. So a mobile communication equipment could be also a tablet-pc or a laptop, for instance.

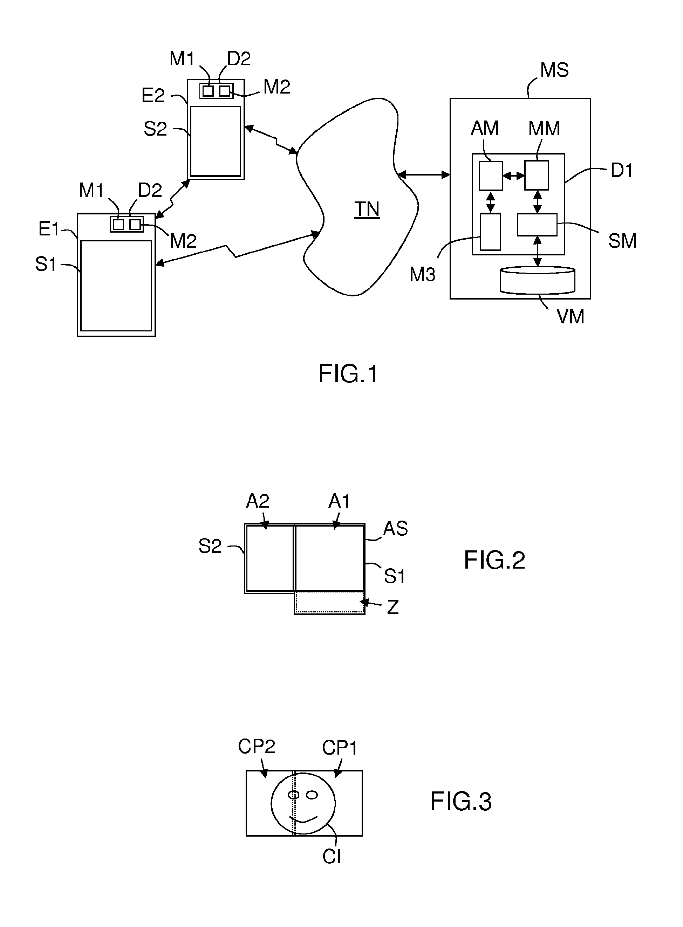

An example of telecommunication system capable of implementing the invention is illustrated in figure 1. This (telecommunication) system comprises a transport network TN (with wireless capacities) to which are coupled a server MS and two mobile communication equipments Ei (i = 1 or 2).

The transport network TN can be a combination of wired and wireless networks.

The server MS comprises a storage means VM with a (very) high storage capacity for storing files of data defining video contents.

In the illustrated example, each mobile communication equipment Ei comprises a single screen Si. But at least one of them could comprise at least two screens. Moreover, in the illustrated example the mobile communication equipments Ei have screens Si of different sizes. But their screens Si could have the same sizes.

Each mobile communication equipment Ei has its own network configuration and its own display configuration. A network configuration comprises at least an IP (Internet Protocol) address, which is the communication identifier of the mobile communication equipment Ei, and a communication port, on which the mobile communication equipment Ei is ready to receive a video stream at the considered instant. A display configuration comprises at least the width Wi, height Hi and maximum supported resolution of the screen Si of the mobile communication equipment Ei.

The transmission method, according to the invention, comprises three steps (i), (ii) and (iii), which may be implemented by first D1 and second D2 devices equipping respectively the server MS and the mobile communication equipments Ei, as illustrated.

Preferably and has illustrated, each second (control) device D2 comprises a manager module M1, that may initiate a display collaboration between at least two mobile communication equipments Ei, and an agent module M2, that responds to requests and messages originating from the manager module M1 of a distant mobile communication equipment Ei' or the server MS (and more precisely its first device D1).

Each second device D2 can be made of software modules. But it may be also made of a combination of software modules and electronic circuit(s) or hardware modules.

The first step (i) begins when at least two mobile communication equipments Ei have decided to display complementary parts of a same video content on their screens Si.

Such a situation may occur, for instance, when the user of a first mobile communication equipment (for instance E1) has decided to watch a selected video content, stored into the server MS, in a streaming mode and with a resolution higher than the one allowed by the bandwidth assigned to his first mobile communication equipment E1. In this case, the second (control) device D2 of this first mobile communication equipment E1 (and more precisely its manager module M1) is arranged for determining if at least one other mobile communication equipment Ei' (here i' = 2) is located in the radio vicinity of the first mobile communication equipment E1. It is important to note that the mobile communication equipments Ei must be capable of exchanging data therebetween over short distances, for instance by means of Bluetooth communications or Wi-Fi communications (notably in ad hoc mode). The determination of neighbour(s) Ei' may be automatically performed by the first mobile communication equipment E1 or on request of its second (control) device D2.

Once a second (control) device D2 is informed of the presence of at least one neighbour Ei', its management module M1 generates a message intended for proposing a display collaboration of the selected video content and orders the transmission of this message from its first mobile communication equipment E1 to each neighbour Ei'. Then, this message is processed by the agent module M2 of each neighbour Ei' and the proposed display collaboration is displayed on each screen Si'. If the user of a neighbour Ei' accepts such a display collaboration, the agent module M2 of this neighbour Ei' generates an agreement response and orders the transmission of this response from its mobile communication equipment Ei' to the first mobile communication equipment E1. Then, the management module M1 of the first mobile communication equipment E1 generates a request intended for retrieving the network configuration of each neighbour Ei' that is ready to collaborate and orders the transmission of this request from its first mobile communication equipment E1 to each concerned neighbour Ei'. In response to this request, the agent module M2 of each concerned neighbour Ei' generates a response containing the network configuration of its neighbour Ei' and orders the transmission of this response from its mobile communication equipment Ei' to the first mobile communication equipment E1.

In a more concise variant, the message intended for proposing a display collaboration of a selected video content may also request the network configuration of each neighbour Ei'. So, if the user of a neighbour Ei' accepts a display collaboration, the agent module M2 of this neighbour Ei' generates an agreement response comprising also the network configuration and orders the transmission of this response from its mobile communication equipment Ei' to the first mobile communication equipment E1.

In the first step (i), when at least two mobile communication equipments Ei (here E1 and E2) have decided to display complementary parts of the same video content on their screens Si (here S1 and S2), one of these mobile communication equipments Ei (preferably the first one whose manager module M1 has initiated the display collaboration) requests this video content near the server MS and provides the latter (MS) with the network configurations of all the mobile communication equipments Ei ready to collaborate. This request is generated by the manager module M1 which orders to its mobile communication equipment Ei (E1) to transmit it to the server MS.

As illustrated in the non-limiting example of figure 1, the first device D1 may comprise a module M3 in charge of initiating shared streaming sessions upon receipt of the request transmitted by the first mobile communication equipment E1.

In the second step (ii) of the method, the server MS (on request of its first device D1) individually requests the display configurations near the mobile communication equipments Ei ready to collaborate (here E1 and E2) and then determines individual screen areas Ai, intended for displaying the complementary parts of the requested video content, from these requested display configurations, and an optimal video resolution from the sum of estimated bandwidths of these mobile communication equipments E1 and E2 and the sum AS of the determined individual screen areas Ai (here AS = A1 + A2).

On means here by "individual screen area Ai", a part of a screen Si that has been selected by the first device D1 for displaying one of the complementary parts of a requested video content.

This second step (ii) may be carried out by an arrangement means AM and a managing means MM of the first device D1. More precisely, this arrangement means AM is arranged, after having received the network configurations of at least two mobile communication equipments Ei ready to collaborate, for individually requesting the display configurations of these mobile communication equipments Ei and then for determining their individual screen areas Ai. The managing means MM is arranged for determining an optimal resolution for the video content from the sum of estimated bandwidths of the mobile communication equipments Ei (ready to collaborate) and the sum AS of the determined individual screen areas Ai.

The server MS (and more precisely the managing means MM) may determine the sum of estimated bandwidths of the mobile communication equipments Ei (ready to collaborate) from the bandwidth of the first mobile communication equipment E1 that has been estimated during an individual session initially established by the latter (E1) to receive the video content before initiating the display collaboration. Indeed, in most of the cases, the user of a first mobile communication equipment (for instance E1) first decides to watch a selected video content, stored into the server MS, in a streaming mode. So, a first stream session is established between his first mobile communication equipment E1 and the server MS. And, if the displayed resolution does not satisfy him, he may decide to try to get a higher resolution through a collaboration display according to the invention. During this first stream session, the server MS (and therefore its first device D1) is informed of the bandwidth that is assigned to the first mobile communication equipment E1 for the video content transmission in streaming mode. Therefore, the managing means MM may, for instance, determine the sum of estimated bandwidths of the mobile communication equipments Ei (ready to collaborate) by combining their assigned bandwidths. The assigned bandwidth of the first mobile communication equipment E1 is estimated during the first stream session, and the assigned bandwidths of the other concerned mobile communication equipments Ei are estimated when they start negotiation to participate to the session.

For instance, in certain circumstances the sum of estimated bandwidths of the concerned mobile communication equipments Ei may be obtained by multiplying the bandwidth of the first concerned mobile communication equipment E1 estimated during the first stream session, by the number of mobile communication equipments Ei that are ready to collaborate.

For instance, the arrangement means AM may compute an optimal alignment $A_{opt}$ of the two mobile communication equipments Ei based on their screen sizes (Wi, Hi). This optimal alignment $A_{opt}$ constitutes the best arrangement amongst an ordered set of different equipment arrangements $A_k$. This optimal alignment $A_{opt}$ may be, for instance, given by the following relation:

$$A_{opt} = \min\left(\frac{\sum_{A_k} Wi}{\sum_{A_k} Hi} - r\right),$$

where r is the ratio of the video content (3:4 or 16:9, for instance). This results from the fact that we have the following relation:

$$\max\{E_{A_k} - r\} = \max\left\{\frac{\sum_{A_k} W_i}{\sum_{A_k} h_i} - r\right\},$$

where $E_{A_k}$ is the closest supported resolution compared to the video's resolution (in fact the arrangement with the closest supported resolution compared to the video's resolution is chosen).

Then, the managing means MM may merge the optimal alignment $A_{opt}$ with the combination of the estimated bandwidths to determine the optimal video resolution. So, this optimal video resolution is determined while taking into account the global display area that is offered by the mobile communication equipments Ei, but not just the screen sizes, which allows getting the best watching quality.

A non-limiting example of display area AS, computed by the first device D1 for a screen arrangement of the two mobile communication equipments E1 and E2, is illustrated in figure 2. In this example, the display area AS comprises the first individual screen area A1, whose surface is a part of the surface of the screen S1 of the first mobile communication equipment E1, and the second individual screen area A2, whose surface is the surface of the screen S2 of the second mobile communication equipment E2. In this example, the reference Z designates the part (in dotted line) of the first screen S1 that will not be used during the display collaboration.

Preferably, at the end of step (ii), the server MS (and more precisely the managing means MM) may generate a calibration image CI, which is divided into complementary parts CPi corresponding respectively to the determined individual screen areas Ai. For instance, and as illustrated in the example of figure 3, the first complementary part CP1 may have a surface equal to the first individual screen areas A1, and the second complementary part CP2 may have a surface equal to the second individual screen areas A2. Then the server MS simultaneously transmits this calibration image complementary parts CPi, on request of the managing means MM, to the corresponding mobile communication equipments Ei (ready to collaborate). Then, the concerned mobile communication equipments Ei (here E1 and E2) display respectively these first CP1 and second CP2 complementary parts of the calibration image CI, on request of their second devices D2, onto their screens S1 and S2, in the corresponding determined individual screen areas A1 and A2. Thus, the respective users of these first E1 and second E2 mobile communication equipments may precisely adjust their relative positions to rebuild the calibration image CI from the displayed complementary parts CP1 and CP2.

Also during step (ii), the server MS (and more precisely the managing means MM) may determine the current relative positions of the mobile communication equipments Ei (ready to collaborate), and may use these current relative positions to determine the corresponding individual screen areas Ai. Such an option is intended for determining the respective orientations (vertical or horizontal) of the screens Si after their mobile communication equipments Ei have been grouped and arranged by their users, in order the display area AS be determined while taking into account these screen orientations (or screen arrangement). This aims at avoiding important changes in the initial screen arrangement. But, in the case where an optimal resolution can be obtained with a display area AS that requires an important change in the initial screen arrangement, such a display area AS may be proposed to the users.

In the third step (iii) of the method, the server MS simultaneously transmits the video content complementary parts with the determined optimal video resolution, on request of its first device D1, to the corresponding mobile communication equipments Ei, into individual video streams of a session, so that they display these complementary parts into the individual screen areas Ai of their respective screens Si.

This third step (iii) may be carried out by a splitting means SM of the first device D1, which is coupled to the storing means VM of the server SM. More precisely, this splitting means SM is arranged for splitting the requested video content into complementary parts adapted to the determined individual screen areas Ai and to the determined optimal video resolution, and for ordering the server SM to transmit them simultaneously to the corresponding mobile communication equipments Ei (here E1 and E2) into individual video streams of a session.

So, now each mobile communication equipment Ei only receives a part of a video content that optimally uses the bandwidth assigned to its individual video stream, which allows an increase of the resolution and therefore of the user quality of experience (or QoE) without needing a high bandwidth.

The first device D1 can be made of software modules. But it may be also made of a combination of software modules and electronic circuit(s) or hardware modules.

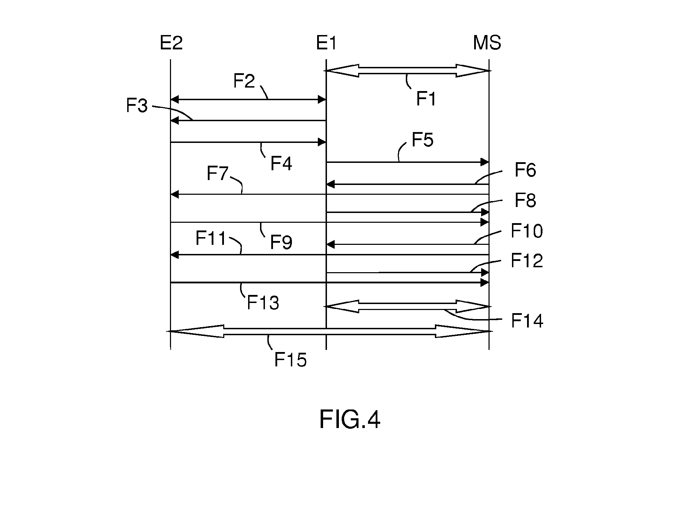

A non-limiting example of sequence diagram allowing implementation of the method in the telecommunication system of figure 1 is illustrated in figure 4. In this example, it is considered that there are only first E1 and second E2 mobile communication equipments in the same area.

Here, the first mobile communication equipment E1 has established a first stream session with the server MS (through the transport network TN) (arrow F1), in order its first user starts watching a selected video content, in a streaming mode and with a first resolution (lower than the maximum resolution offers by the display capacities of the first screen S1).

The first displayed resolution do not satisfying this first user, he requests from its first mobile communication equipment E1 a higher resolution through a collaboration display.

So, the second device D2 of his first mobile communication equipment E1 determines if at least one other mobile communication equipment Ei' (i' ≠ 1) is ready to collaborate with the first mobile communication equipment E1 for displaying complementary parts of the selected video content. In this example, the second mobile communication equipment E2 is only detected in the radio vicinity of the first mobile communication equipment E1 (arrow F2).

Then this second device D2 orders to its first mobile communication equipment E1 to transmit a message, proposing a display collaboration of a selected video content and requiring its network configuration, to the second mobile communication equipment E2 (arrow F3). Then, the second device D2 of the second mobile communication equipment E2 triggers the display of a message proposing a collaboration display for the selected video content on the second screen S2.

Here, the second user accepts the proposed display collaboration. So, the second device D2 of the second mobile communication equipment E2 orders to the latter (E2) to transmit an agreement response comprising its network configuration to the first mobile communication equipment E1 (arrow F4).

Then, the second device D2 of the first mobile communication equipment E1 orders to the latter (E1) to transmit a request designating the selected video content and comprising the network configurations of the first E1 and second E2 mobile communication equipments to the server MS, through the transport network TN (arrow F5).

In response to this request, the first device D1 of the server MS orders to the latter (MS) to transmit individual messages requesting their respective display configurations to the first E1 and second E2 mobile communication equipments (arrows F6 and F7).

In response to these requests, the second devices D2 of the first E1 and second E2 mobile communication equipments order to the latter (E1 and E2) to transmit a response comprising their respective display configurations to the server MS (arrows F8 and F9).

Then the first device D1 may order to its server MS to transmit individual requests requesting their respective current screen positions and orientations to the first E1 and second E2 mobile communication equipments (arrows F10 and F11).

In response to these requests, the second devices D2 of the first E1 and second E2 mobile communication equipments order to the latter (E1 and E2) to transmit a response comprising their respective current screen positions and orientations to the server MS (arrows F12 and F13).

Then, the first device D1 of the server MS determines individual screen areas A1 and A2, intended for displaying the two complementary parts of the requested video content, from the two received display configurations, and an optimal video resolution from the sum of the estimated bandwidths of the first E1 and second E2 mobile communication equipments and the sum AS of the determined individual screen areas A1 and A2.

Then, the first device D1 of the server MS splits the requested video content into two complementary parts adapted respectively to the determined individual screen areas A1 and A2 and to the determined optimal video resolution. Finally, the first device D1 orders to its server MS to establish individual video streams of a session with the first E1 and second E2 mobile communication equipments (arrows F14 and F15), so that they display these complementary parts into the individual screen areas A1 and A2 of their respective screens S1 and S2.

If during the session one of the first E1 and second E2 mobile communication equipments decides to stop the display collaboration, the first device D1 of the server MS determines a new display configuration (and therefore a new resolution) adapted to the mobile communication equipment(s) remaining in the session.

The invention is not limited to the embodiments of method and first and second devices described above, only as examples, but it encompasses all alternative embodiments which may be considered by one skilled in the art within the scope of the claims hereafter.

**Claims**

1. Method for transmitting a video content from a server (MS) to at least two mobile communication equipments (Ei), having a network configuration and a screen (Si) with a display configuration, said method comprising a step (i) during which, in case where at least two of said mobile communication equipments (Ei) have decided to display complementary parts of a same video content on their screens (Si), one of said mobile communication equipments (Ei) requests said video content near said server (MS) and provides the latter (MS) with said network configurations, a step (ii) during which said server (MS) individually requests said display configurations near said mobile communication equipments (Ei) and then determines individual screen areas intended for displaying said video content complementary parts from said requested display configurations, and an optimal video resolution from a sum of estimated bandwidths of the concerned mobile communication equipments (Ei) and a sum of said determined individual screen areas, and a step (iii) during which said server (MS) simultaneously transmits said video content complementary parts with said determined optimal video resolution to the corresponding mobile communication equipments (Ei) into individual video streams of a session, so that they display these complementary parts into the individual screen areas of their respective screens (Si).

2. Method according to claim 1, wherein in step (i) a first mobile communication equipment (Ei), that is the first to decide displaying said video content, determines if at least one other mobile communication equipment (Ei') located in its radio vicinity is ready to collaborate for displaying together said video content complementary parts, and in the affirmative said first mobile communication equipment (Ei) requests said network configuration from each other mobile communication equipment (Ei') that is ready to collaborate, and then provides said server (MS) with its own network configuration and each received network configuration.

3. Method according to one of claims 1 and 2, wherein in step (ii) said server (MS) determines said sum of estimated bandwidths by combining assigned bandwidths of said mobile communication equipments (Ei).

4. Method according to one of claims 1 to 3, wherein at the end of step (ii) said server (MS) generates a calibration image divided into complementary parts corresponding respectively to said determined individual screen areas, and then simultaneously transmits said calibration image complementary parts to the corresponding mobile communication equipments (Ei) so that they displayed them respectively onto their screens (Si) in the corresponding determined individual screen areas, in order their respective users precisely adjust relative positions of their mobile communication equipments (Ei) to rebuild said calibration image from said displayed complementary parts.

5. Method according to one of claims 1 to 4, wherein each network configuration comprises at least an IP address and a communication port that can receive a video stream.

6. Method according to one of claims 1 to 5, wherein in step (ii) said server (MS) determines current relative positions of said mobile communication equipments (Ei) that are ready to collaborate, and uses these current relative positions to determine said individual screen areas.

7. Device (D1) for controlling transmission of a video content from a server (MS) to at least two mobile communication equipments (Ei), having a network configuration and a screen (Si) with a display configuration, said device (D1) comprising i) an arrangement means (AM) arranged, after having received network configurations of at least two mobile communication equipments (Ei) having decided to display complementary parts of a same video content on their screens (Si), for individually requesting the display configurations of said mobile communication equipments (Ei) and then for determining individual screen areas intended for displaying said video content complementary parts from said requested display configurations, ii) a managing means (MM) arranged for determining an optimal resolution for said video content from a sum of estimated bandwidths of the concerned mobile communication equipments (Ei) and a sum of said determined individual screen areas, and iii) a splitting means (SM) arranged for splitting said video content into said complementary parts with said determined optimal video resolution so that they could be simultaneously transmitted by said server (MS) to the corresponding mobile communication equipments (Ei) into individual video streams of a session and then displayed into the individual screen areas of their respective screens (Si).

8. Device according to claim 7, wherein said managing means (MM) is arranged for determining said sum of estimated bandwidths from the bandwidth of a first mobile communication equipment (Ei) estimated during an individual session initially established by the latter (Ei) with said server (MS) to receive said video content before initiating said collaboration.

9. Device according to one of claims 7 and 8, wherein said splitting means (SM) is arranged, before transmitting said individual video streams, for generating a calibration image divided into complementary parts corresponding respectively to said determined individual screen areas, and then for simultaneously transmitting said calibration image complementary parts to the corresponding mobile communication equipments (Ei) so that they display them respectively onto their screens (Si) in the corresponding determined individual screen areas, in order their respective users precisely adjust relative positions of their mobile communication equipments (Ei) to rebuild said calibration image from said displayed complementary parts.

10. Device according to one of claims 7 to 9, wherein said managing means (MM) is arranged for determining current relative positions of said mobile communication equipments (Ei) that are ready to collaborate, and for using these current relative positions to determine said individual screen areas.

11. Server (MS) for transmitting video contents to mobile communication equipments (Ei), wherein it comprises a device (D1) according to one of claims 7 to 10.

12. Control device (D2) for a mobile communication equipment (Ei) having a network configuration and a screen (Si) with a display configuration, said control device (D2) being arranged i) for determining if at least one other mobile communication equipment (Ei') located in the radio vicinity of said mobile communication equipment (Ei) is ready to collaborate with the latter (Ei) for displaying complementary parts of a same video content on their screens (Si), and ii) for providing a server (MS) with said network configurations so that it transmits said video content complementary parts with an optimal video resolution to said mobile communication equipments (Ei, Ei') that are ready to collaborate.

M1    D2

E2

M2

S2

MS

AM    MM

D1

TN

M3    SM

S1    M1    D2

E1

M2

VM

FIG.1

A2    A1

AS

S2

S1

Z

FIG.2

CP2    CP1

CI

FIG.3

FIG.4

Europäisches
Patentamt

European
Patent Office

Office européen
des brevets

**EUROPEAN SEARCH REPORT**

Application Number

EP 12 19 1347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/144283 A1 (CURCIO IGOR DANILO [FI] ET AL) 10 June 2010 (2010-06-10)<br>* paragraph [0023] - paragraph [0033] *<br>* paragraph [0043] *<br>* paragraph [0046] *<br>* paragraph [0048] - paragraph [0072] *<br>* paragraph [0096] - paragraph [0098] *<br>----- | 1-12 | INV.<br>H04N21/414<br>H04N21/431<br>H04N21/41<br>H04N21/258<br>H04N21/24 |
| A | US 2007/288651 A1 (NASSOR ERIC [FR] ET AL) 13 December 2007 (2007-12-13)<br>* figures 2,3 *<br>* figures 7A, 7B *<br>* paragraph [0001] *<br>* paragraph [0100] - paragraph [0123] *<br>* paragraph [0151] *<br>* paragraph [0167] - paragraph [0171] *<br>* paragraph [0184] - paragraph [0185] *<br>----- | 1-12 | |
| A | US 2008/216125 A1 (LI SHIPENG [CN] ET AL) 4 September 2008 (2008-09-04)<br>* paragraph [0003] *<br>* paragraph [0018] - paragraph [0023] *<br>* paragraph [0028] - paragraph [0030] *<br>* paragraph [0041] *<br>* paragraph [0046] *<br>* paragraph [0057] - paragraph [0061] *<br>* paragraph [0073] - paragraph [0075] *<br>----- | 1-12 | TECHNICAL FIELDS SEARCHED (IPC)<br><br>H04N |

The present search report has been drawn up for all claims

| Place of search | Date of completion of the search | Examiner |
|---|---|---|
| The Hague | 8 April 2013 | Boubal, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 19 1347

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2013

| Patent document cited in search report | | Publication date | Patent family member(s) | | Publication date |
|---|---|---|---|---|---|
| US 2010144283 | A1 | 10-06-2010 | NONE | | |
| US 2007288651 | A1 | 13-12-2007 | FR<br>US | 2902266 A1<br>2007288651 A1 | 14-12-2007<br>13-12-2007 |
| US 2008216125 | A1 | 04-09-2008 | NONE | | |

EPO FORM P0459

For more details about this annex : see Official Journal of the European Patent Office, No. 12/82